# EUROPEAN PATENT SPECIFICATION

(11) **EP 1 620 659 B1**
(45) Date of publication and mention of the grant of the patent: **03.12.2014**
(21) Application number: 04729554.8
(22) Date of filing: 26.04.2004
(51) Int. Cl.: F16G 11/00

(54) **METHOD FOR REALISING AN END CONNECTION BETWEEN A SOCKET AND METAL CABLE COMPOSED OF STRANDS**
VERFAHREN ZUM FORMEN EINER ENDVERBINDUNG ZWISCHEN EINEM KABELSCHUH UND EIN AUS MEHREREN STRÄNGEN BESTEHENDES METALLSEIL
METHODE POUR REALISER UNE CONNEXION D'EXTREMITE ENTRE UNE PRISE FEMELLE ET UN CABLE METALLIQUE COMPOSE DE FILS

(30) Priority: 24.04.2003 NL 1023258
(43) Date of publication of application: 01.02.2006
(73) Proprietor: T.P. Europoort Holding B.V., 3198 LS Europoort Rotterdam (NL)
(72) Inventor: Vermeulen, Thomas Peter, 3180 AC Rozenburg (NL)
(74) Representative: Nederlof, Etienne C.
(86) International application number: PCT/NL2004/000273
(87) International publication number: WO 2004/094865

(56) References cited:
- DE-A1- 19 962 457
- FR-A- 1 376 395
- US-A- 1 931 176
- US-A- 2 945 457
- US-A- 4 317 640
- US-A- 4 642 854

## Description

The invention relates to a method for realising an end connection between a socket and a metal cable composed of strands. A method according to the preamble of claim 1 is known from US 1,931,176 A.

Such a method is also known from actual practice. In the known method a steel cable is tied near the steel cable end using a seizing. A socket is then slid from the outside over the distal cable end with the seizing, after which the strands of the steel cable end are unwound up to the seizing and are bent to the outside to form a broomed end. After the broomed end has been formed the broomed end is degreased. Subsequently the socket is pulled along the part of the steel cable that is not unwound and over the broomed end in order to position the broomed end within the cone of the socket. Synthetic material is then cast into the socket around and in the broomed end wherein after curing of the synthetic material the connection between the socket and the steel cable end has been accomplished. The seizing serves to prevent that strands of the steel cable move while the synthetic material is cast into the socket. Such a method is described in NPR 3579 (first edition, September 1986).

A drawback of the known method is that the reliability of the accomplished connection is limited. Especially in case of larger loads with vibrations, for instance in case a gripper has been attached to the socket for unloading coal or other bulk goods from ships using a crane, or in applications for loading and unloading containers, the strands of the steel cable break at the location of the end connection in a relative short time. This is caused by the difficulty of positioning the socket such that the centre line of the socket coincides with the centre line of the steel cable. When the centre line of the socket in the accomplished end connection does not coincide with the centre line of the steel cable, the cable strands in use are unequally loaded at the location of the end connection which is disadvantageous for the reliability of the end connection. The seizing, when the socket slides past it, may furthermore get damaged or break as a result of which the straight positioning of the socket with respect to the steel cable may even be rendered impossible.

When a socket that has been placed out of true around the steel cable has to be put straight prior to casting in synthetic material into the socket, this often involves deformation (rolling up and opening) of stands as a result of the contact between the socket and the strands. This deformation, when the realised end connection is used, is a further cause of unequal load of strands at the location of the end connection. Because at the location of the realised end connection the steel cable extends within the socket, it is not possible to inspect the steel cable there. Because of this, and because of the limited reliability of the realised end connection, regular preventive replacement of the steel cable including socket obtained according to the known method is necessary, which is expensive.

It is an object of the invention to provide a method of the kind mentioned in the preamble wherein the end connection realised between metal cable and socket has a larger reliability.

To that end the invention provides a method according to claim 1.

By always using the fixing device when realising the end connection, deformation of the strands is prevented: the fixing device keeps the strands continually in their place, both when being broomed, the squeezing together of the broomed end, the arranging and positioning of the socket on the cable and the casting in of the casting compound and having it cure in the socket. Because the socket is slid down via the distal end of the free cable portion, the length over which the socket is slid along the straight cable portion before the broomed end, while in contact with the strands, remains limited. As a result the deformation of the strands is further prevented.

Because the strands of the cable before the broomed end are hardly deformed if at all during the realisation of the end connection, the strands at the location of the end connection, when using the cable with integrally cast socket, will be equally loaded. As a result the reliability of the end connection is increased. The end connection will thus not always be the weakest spot in the cable-socket assembly any more as a result of which a large increase of lifespan of the cable with socket is achieved. The cable portion extending beyond the socket will now in many cases be determining for the lifespan of the cable-socket assembly. As a result and because the condition of the cable beyond the socket can be visually inspected, corrective replacement instead of preventive replacement of the cable with socket is now possible as a result of which a large reduction of costs is achieved. Due to the greater reliability of the end connection realised, the risk of an unexpected cable rupture at the location of the end connection is reduced. This results in greater safety to personnel, and the risk of damage of adjacent objects and installations as a result of a lashing ruptured cable end is reduced.

Because the first cable portion is stationary fixed with the fixing device, deformation of the strands is further complicated. Moreover the stationary fixation further increases the manageability and controllability of the steps of brooming, squeezing together of the broomed end, arranging and positioning the socket on the cable and casting in the casting compound and letting it cure in the socket. As a result the reliability of the realised end connection is further increased. For the method steps of degreasing the fixation device is detached from the holding means. A broomed end formed may then for instance be dipped into a bath of degreasant.

The casting mould arranged around the second cable portion together with the cured casing material has a fixing function for the cable. Deformation of strands is thus prevented in the further actions carried out with the casting mould and casing arranged around the second cable portion.

It is observed that from US patent specification 1.931.176 a method is known for arranging a socket around a cable end wherein first a clamp is arranged around the cable and the cable end is broomed. Subsequently the cable is horizontally clamped between the heads of a stationary positioned fixing device after which the socket is partially slid over the broomed end. Then the cable is detached from the fixing device and brought into a vertical position wherein the socket is slid further over the broomed end and zinc is cast into the socket to realise the end connection.

Preferably the casting mould is arranged around the second cable portion that is immediately adjacent to the proximal end of the free cable portion.

In a preferred embodiment the broomed end is formed when the casting mould has already been arranged around the second cable portion, and after the resilient casing has been formed. By arranging the casting mould immediately adjacent to the proximal end of the free cable portion the base of the broomed end is fixed by the casing and the casting mould when the broomed end is formed. Deformation of the straight cable portion before the broomed end is thus prevented. Due to the fixing effect of the casting mould and the casing use of the seizing has become unnecessary. Disruptions of the positioning of the socket with respect to the cable as a result of a shifted or broken seizing are no longer at issue. Furthermore the possibility of visual inspection of the cable with the realised end connection is increased because a seizing is no longer present on the cable protruding from the socket: the cable can be visually inspected up to the socket.

Advantageously the internal diameter of the casting mould is larger than the external diameter of the cable. The casing formed around the second cable portion then has a larger outer diameter than the outer diameter of the straight cable.

Advantageously the internal diameter of the casting mould is larger than the diameter of the insertion opening for the cable in the socket.

Preferably the fixing device serves as a stop in axial direction for the casting mould. Because the cable is not exposed between the fixing device and the casting mould, the possibility of deformation of the cable strands is further limited. By serving as a stop the fixing device forms an aid in positioning the casting mould around the second cable portion.

Preferably the casting mould is centred with respect to the fixing device by means of centring means. As a result, and because the first cable portion is centred with respect to the fixing device due to clamping in the fixing device, the second cable portion is also centred with respect to the casting mould. The centre line of the casing formed will thus coincide as much as possible with the centre line of the second cable portion. In the end connection realised a uniform load of cable strands is thus enhanced.

Preferably the centring means comprise an external wall portion of the fixing device and an internal wall portion of the casting mould fitting tightly around it. Centring takes place by simply slidingly arranging the casting mould with its internal wall portion around the external wall portion of the fixing device cooperating therewith.

A preferred embodiment is characterised in that prior to casting in the second casting compound into the casting mould, a sealant is arranged between the strands of the cable and the fixing device in order to prevent that when casting in the second casting compound into the casting mould, the second casting compound runs into the fixing device.

In a preferred embodiment the second casting compound is a synthetic material, preferably polyurethane.

In a preferred embodiment the length over which the first cable portion is fixed by the fixing device is larger than approximately three times the outer diameter of the cable, preferably equalling approximately seven times the outer diameter of the cable.

Preferably squeezing the broomed end together takes place by moving a cylindrical or annular member arranged around the base of the broomed end upwards along the broomed end. The internal diameter of the cylindrical or annular member preferably approximately equals the external diameter of the straight cable.

A preferred embodiment is characterized by sliding the cylindrical or annular member along the broomed end up to just before the distal end itself of the broomed end and then arranging the socket over the distal end of the broomed end. By sliding the cylindrical or annular member up to just before the distal end of the broomed end, the distal end of the broomed end itself is also urged together. The socket can then be arranged over the squeezed together broomed end via its distal end.

Preferably the socket is slid down over the broomed end jointly with the cylindrical or annular member.

Preferably the cylindrical or annular member is removed when the cylindrical or annular member abuts the casting mould when sliding down.

Preferably the socket is slid against the casting mould after removal of the cylindrical or annular member and subsequently the casting mould is removed. The casing formed around the second cable portion is then exposed in order to be able to slide the socket over it.

In a preferred embodiment the socket is slid over the formed casing after removal of the casting mould. The casing itself as well has a fixing action for the cable in method steps that have to be carried out after removal of the casting mould. When the casing has a larger outer diameter than the outer diameter of the straight cable then no direct contact is possible between the cable and the socket at the location of the casing. As a result wear of the cable and transmission of vibrations between socket and cable is prevented. When the outer diameter of the non-deformed casing is larger than the insertion opening for the cable in the socket, it is ensured that with the socket slid around the casing the outer surface of the casing abuts the surface of the insertion opening of the socket. The casing thus functions as dirt- and dust sealing for the end connection.

Preferably a casing clamp is used for squeezing the casing together when sliding the socket over the casing. By using a casing clamp it is prevented that the casing is rolled-up when the socket is slid over it. Alternatively the surface of the casing can be lubricated.

Preferably the socket is slid over the broomed end up against the fixing device. The fixing device serves as stop for the socket which is an aid in the straight positioning of the socket with respect to the cable.

Preferably the last stage of sliding the socket over the cable takes place by means of a device for positioning the socket with respect to the cable.

Preferably the positioning device comprises a cross piece to be inserted through the eye of the socket, and adjustable legs attached to the cross piece. By adjusting the length of a leg, the socket, by means of the cross piece, can be slid further up the cable due to that leg. By using two legs the possibility is created of adjusting the orientation of the socket with respect to the cable.

Preferably the legs are attachable to the fixing device. By shortening the length of a leg, the socket at the side of said leg is slid further up the cable in the direction of the fixing device.

In a preferred embodiment the first cable portion is held in a vertical position by the fixing device, preferably with the broomed end pointing upward. As a result after sliding the socket, without having to alter the position of the first cable portion afterwards, the first casting compound can be cast in into the socket. However, from an efficiency point of view, it may be advantageous for the method step of brooming the end, to hold the first cable portion with the fixing device in a horizontal position.

Preferably prior to the demounting of the fixing device, the cable is lubricated via lubricating nipples of the fixing device.

In a preferred embodiment the fixing device comprises two shells that can be clamped onto one another.

In an embodiment, surface grinding of the end of the socket at the location of the insertion opening for the broomed end takes place, prior to sliding the socket over the broomed end. By sliding the socket with the surface ground end over the broomed end up to against the fixing device, the socket as of its own accord can be positioned straight with respect to the fixing device and the cable.

Preferably the socket is internally ground prior to being slid over the broomed end. Protrusions at the inside of the socket are thus removed. When sliding the socket over the broomed end, damaging the resilient casing as a result of such (sharp) protrusions is thus prevented. Due to the smooth internal surface of the socket centring the socket with respect to the cable is enhanced.

Preferably the cable is a steel cable.

The invention further provides an assembly of a cable/cable strand and a socket attached to a cable end, wherein the socket is placed in the proximal end with a press fit on a casing, preferably a synthetic casing, cast on/around the cable.

An exemplary embodiment of the method according to the invention will be described below by way of example on the basis of the figures.
Figure 1 shows the necessary aids for carrying out the method.
Figures 2A, 2B show the arrangement of the fixing clamp around the cable.
Figures 3A and 3B show the cable with the casting mould arranged around it and a cross-section of the casting mould slid over the fixing clamp, respectively.
Figure 4 shows the broomed free cable portion.
Figure 5A and 5B show the arrangement of a cylindrical sleeve around the base of the broomed end, and the sleeve slid just below the distal end of the broomed end, respectively.
Figures 6A-6E show the method steps of arranging the socket over the cable.
Figure 7 shows the casting in of the socket.
Figure 8 shows the end connection between the cable and the socket obtained with the method when the fixing clamp has not yet been removed.

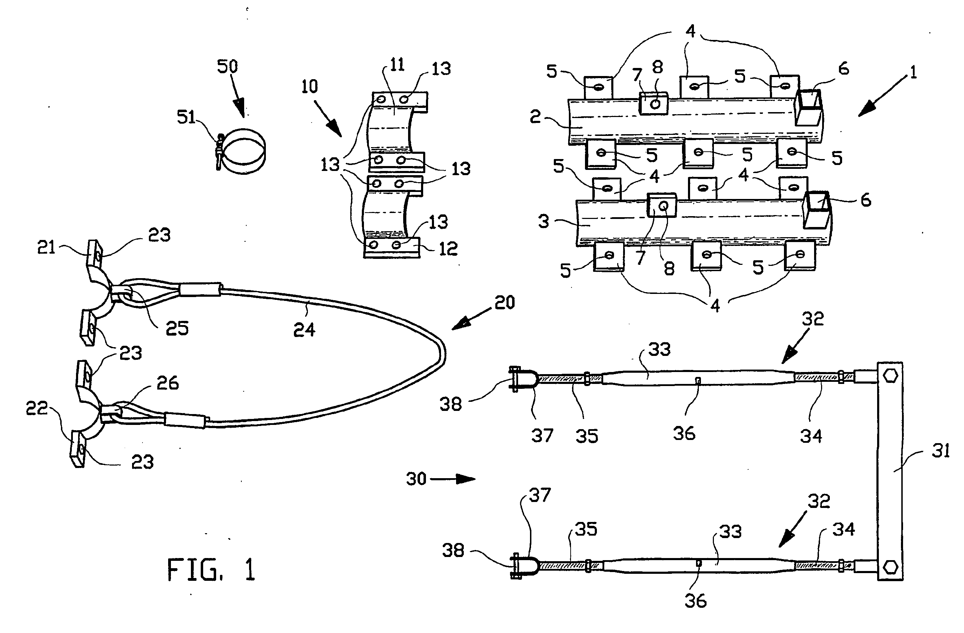

The necessary aids shown in figure 1 are a fixing clamp 1, a casting mould 10, a squeezer 20 for the broomed end, a positioning device 30 for positioning the socket on the cable, and a casing clamp 50. The fixing clamp 1 comprises two shell members 2 and 3 provided with fastening lips 4 having screw openings 5 for attaching the shell members 2 and 3 to each other. Lubricating nipples 6 have been provided for lubricating a cable clamped in by the shell members 2, 3. Lips 7 having openings 8 have been provided for enabling the attachment of the positioning device 30 to the fixing clamp 1. The length in axial direction of the shell members 2 is approximately seven times the outer diameter of the cable.

The casting mould 10 comprises two shell members 11 and 12 each having openings 13 with which the shell members 11 and 12 can be attached to each other by means of bolts. The broomed end squeezer 20 has been built up from shell members 21 and 22 having openings 23 for attaching the shell members 21, 22 to each other. A (metal) cord 24 is attached to respective eyes 25, 26 of the shell members 21, 22. Casing clamp 50 is made of thin plate material and comprises a stretching screw 51 for clamping the casing clamp 50 around a casing.

The positioning device 30 comprises a cross piece 31 to which legs 32 are hinged. Each leg 32 has a bush 33 having internal thread in which rods 34, 35 provided with external thread have been accommodated. By rotating the bush 33 in a certain direction the rods 34, 35 accommodated therein are screwed in or out of the bush 33. For rotating the bush 33 it is provided with holes 36 through which for instance a screw driver can be inserted. For attaching the positioning device 30 to the fixing clamp 1 brackets 37 have been provided with screws 38,

Realising the end connection between cable and socket will be described below on the basis of method steps.

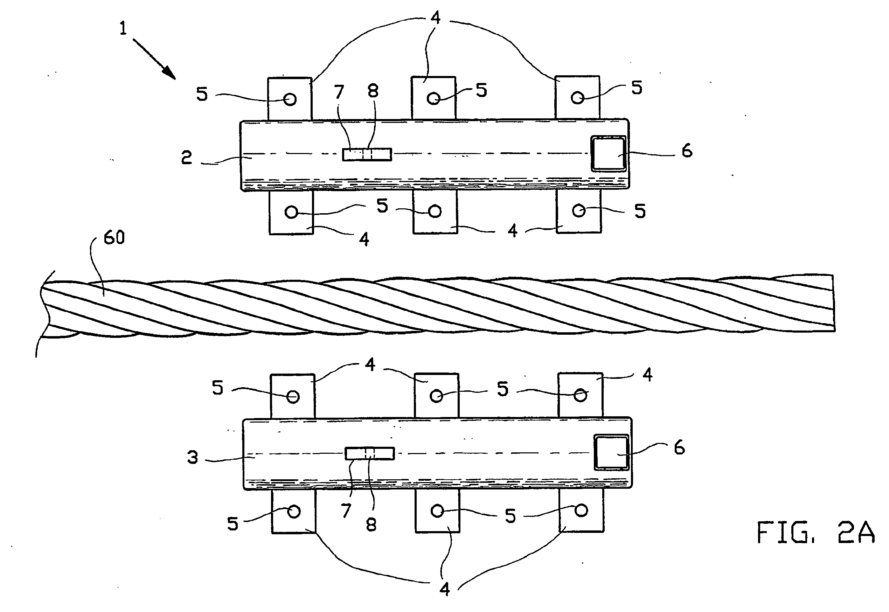

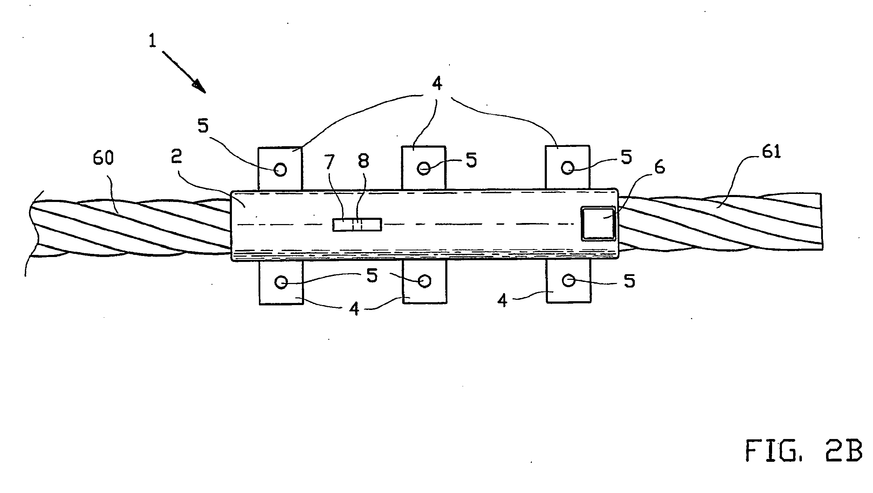

### Step 1, arranging fixing clamp (figures 2A, 2B)

Figure 2A shows shell members 2, 3 of the fixing clamp 1 in order to be arranged around a cable 60 consisting of strands. Figure 2B shows the fixing clamp 1 arranged around the cable 60 wherein the shell members 2, 3 are ready to be screwed to each other. Once screwed together the cable portion surrounded by the fixing clamp 1, and the adjacent cable portions are fixed so that deformation of the strands is prevented. A free cable portion 61 projects with respect to the fixing clamp 1. The fixing clamp 1 remains around the cable 60 during all steps of the method. Not until the end connection is fully established is the fixing clamp 1 removed.

### Step 2, degreasing the free cable portion

The degreasing of the free cable portion 61 takes place by dipping the free cable portion 61 up to the fixing clamp 1 in a bath of degreasant. Degreasing is necessary for the polyurethane casing to be arranged around the free cable portion 61 to adhere properly. Prior to degreasing the strands and the core of the free cable portion 61 have to be untwisted for the degreasant to contact the strands properly. After degreasing the free cable portion 61 is blown clean after which the untwisted strands are twisted back. The untwisting and twisting back of the strands takes place while the fixing clamp 1 is clamped in a vice. For the actual degreasing the fixing clamp 1 is taken from the vice.

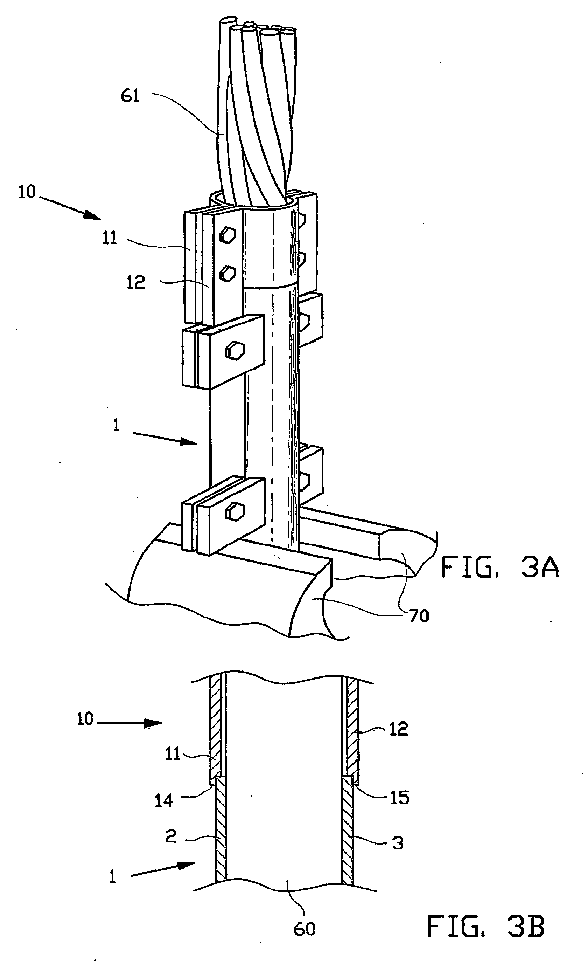

### Step 3, arranging the casting mould and casting the casing (figures 3A, 3B)

The fixing clamp 1 is clamped in the vice 70. Prior to arranging the casting mould 10, a sealant is arranged at the side of the fixing clamp 1 against which the casting mould 10 is to be arranged, so that the polyurethane when casting the mould does not run into the fixing clamp 1. The sealant is arranged on the edge of the fixing clamp 1 and between the strands. Prior to the casting mould 10 being mounted the inside is rubbed with an anti adhesion agent for the casing formed not to adhere to the casting mould 10. Figure 3A shows the casting mould 10 mounted against the fixing clamp 1. The casting mould 10 is then filled with polyurethane to form a casing around the cable. The polyurethane is then left to cure according to directions. Figure 3B shows a cross-section of the cable 60 with fixing clamp 1 and casting mould 10. The shell members 11, 12 have respective internal wall portions 14, 15 which fit tightly over the respective external wall portions of the shell members 2, 3 of the fixing clamp 1. The cable 60 is thus centred with respect to the casting mould 10.

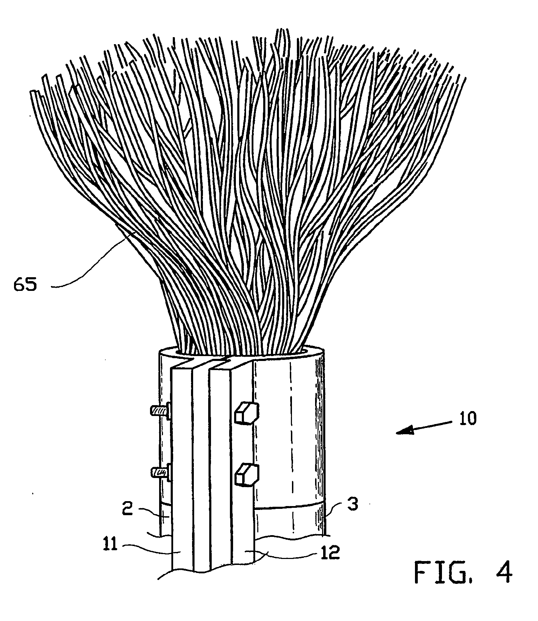

### Step 4, brooming (figure 4)

The fixing clamp 1 is clamped in vice 70. During brooming, the casting mould 10 is left in its place, around the formed resilient casing. For brooming the outer strands of the free cable portion 61 are bent straight so that their prior shape is ended. The outer strands are bent approximately 25° to the outside in the direction of running of the cable 60. Buckling at the location of the casting mould 10 is prevented in order for the risk of fatigue failure in the final end connection to be minimised. The strands of the core are then bent straight so that their prior shape is ended. The strands of the core are bent approximately 25° to the outside in the cable's direction of running. Now again buckling at the location of the casting mould 10 is prevented in order to minimise the risk of fatigue failure. All strands are equally distributed over a cross-section of the cable 60. The core strands are subsequently twisted open as much as possible after which the core strands are tied together with a seizing to create space for twisting the outer strands open. After twisting the outer strands open the seizing is removed so that an equally distributed broomed end 65 is created as shown in figure 4.

### Step 5, degreasing the broomed end

The fixing clamp 1 is detached from the vice 70 after which the broomed end 65 is degreased up to the casting mould 10 in a bath of degreasant. Thus it is achieved that the casting compound optimally adheres to the broomed end 65. After degreasing the broomed end 65 is blown dry in order to vaporize all the degreasant, and the fixing clamp 1 is once again clamped in the vice 70.

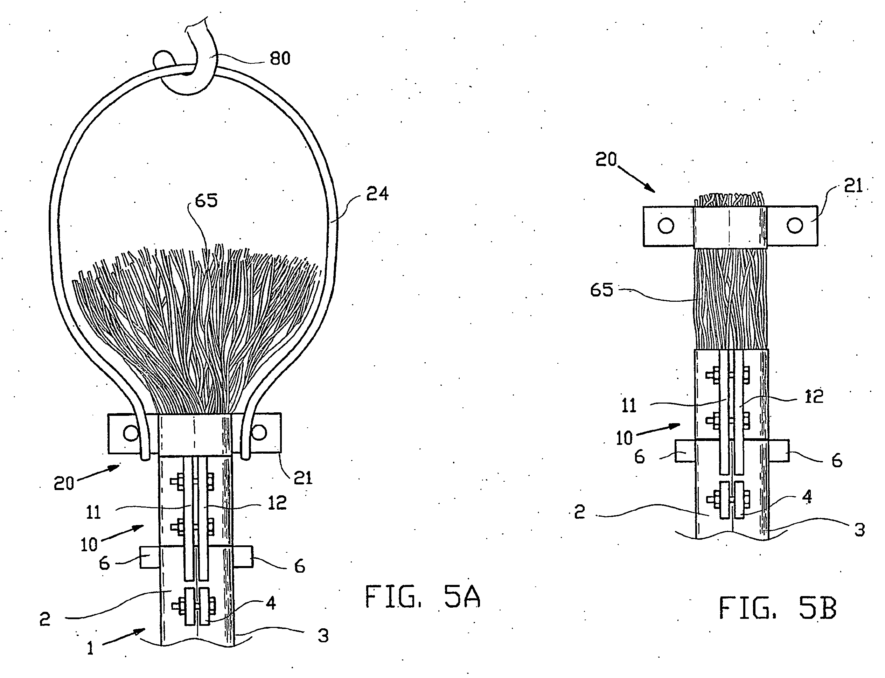

### Step 6, arranging the broomed end squeezer (figures 5A and 5B)

The fixing clamp 1 is clamped in the vice 70. Figure 5A shows the broomed end squeezer 20 arranged around the base of the broomed end 65. For that purpose the two shell members 21 and 22 are screwed together. Cord 24 is attached to a hoisting device 80 in order to pull up the broomed end squeezer 20 along the broomed end 65 in order to squeeze the broomed end 65. Figure 5B shows the situation wherein the broomed end squeezer 20 has been pulled up so that the broomed end 65 has been squeezed together. The upper part of the broomed end 65 is then left free in order to be able to slide the socket over the broomed end 65.

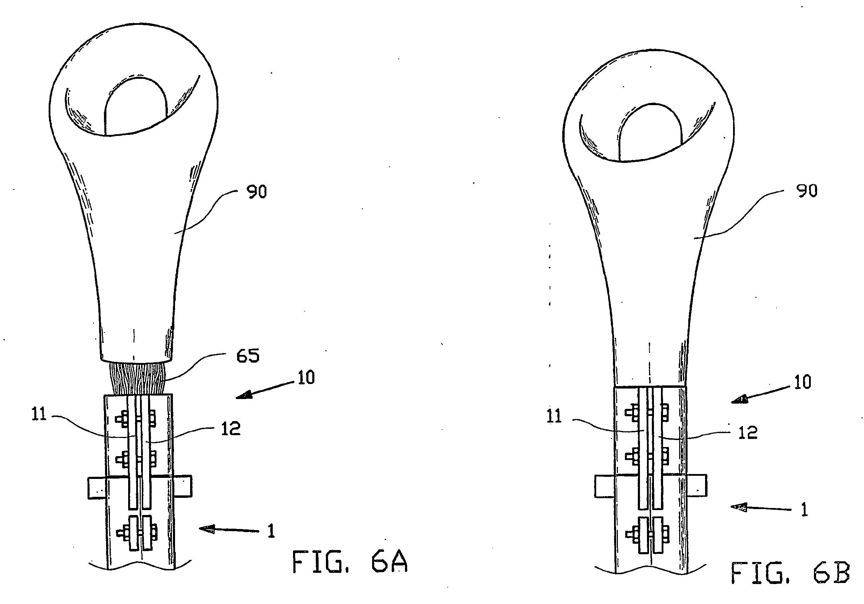

### Step 7, mounting the socket (figures 6A-6E)

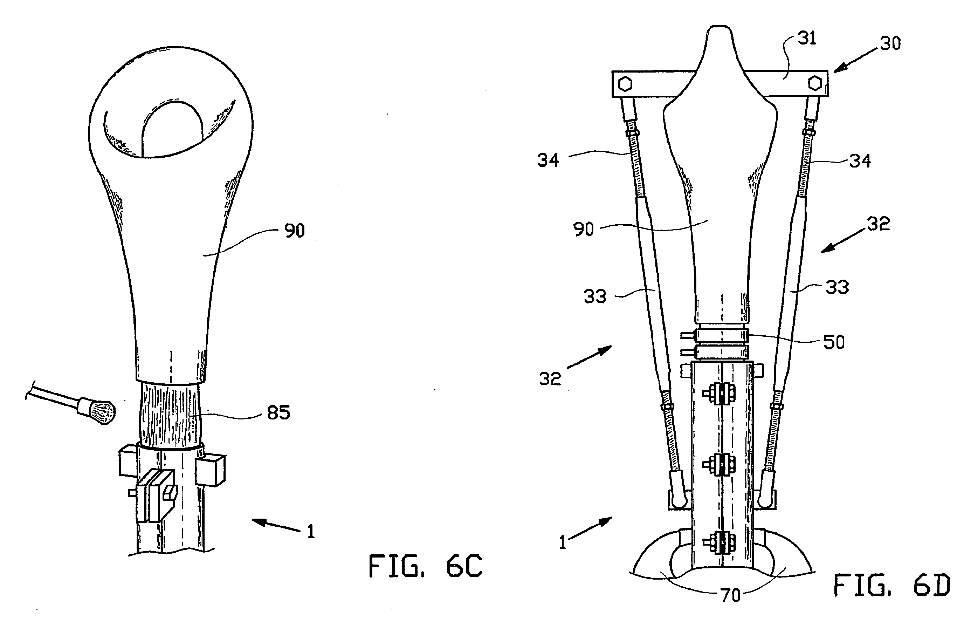

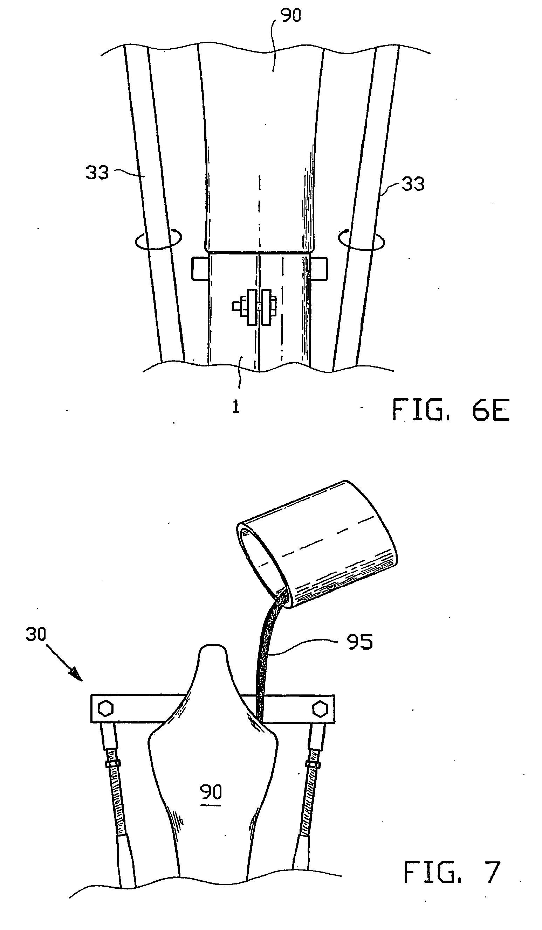

The fixing clamp 1 is clamped in vice 70. Figure 6A shows the socket 90 arranged over the broomed end 65. To that end the socket 90 is moved downwards together with the broomed end squeezer 20 over the top end of the broomed end 65. The broomed end squeezer 20 is removed the moment it touches the casting mould 10. Subsequently the socket 90 is slid further down against the casting mould 10 as shown in figure 6B. The casting mould 10 is then removed after which the polyurethane of the casing 85 is slightly lubricated (figure 6C) in order to be able to slide the socket 90 down along the casing. After that as shown in figure 6D one or more casing clamps 50 are arranged around the casing 85 to further facilitate the downward sliding of the socket 90. The positioning device or bridge-pull device 30 is arranged in order to pull the socket 90 over the casing 85. Here the cross piece 31 is inserted through the cross opening in the socket 90 and the legs 32 are attached at the fixing clamp 1 with their lower ends. By rotating the bushes 33 the socket 90 is moved downward towards the fixing clamp 1, due to engagement of the cross piece 31 on the socket 90. When sliding the socket 90 down, the casing clamp 50 is moved ever more slightly downward when the socket 90 abuts it. Bulging and/or rupture of the casing material is thus prevented. When the socket 90 gets near the fixing clamp 1 the casing clamp 50 is removed and the socket 90 is pulled entirely against the fixing clamp 1. The positioning of the socket 90 for the centre line of the cable and the centre line of the socket 90 to be aligned, takes place by means of the positioning device 30. Figure 6E shows the final situation wherein the socket 90 has been pulled against the fixing clamp 1.

### Step 8, arranging the casting compound in the socket (figure 7)

The fixing clamp 1 is clamped in vice 70. Figure 7 shows the arranging of casting compound 95 in the socket 90 wherein the positioning device 30 has not been demounted. The casting compound 95 is made in accordance with directions from the manufacturer and is left to cure after casting in. Casting in the socket 90 takes place up to the edge of its cone.

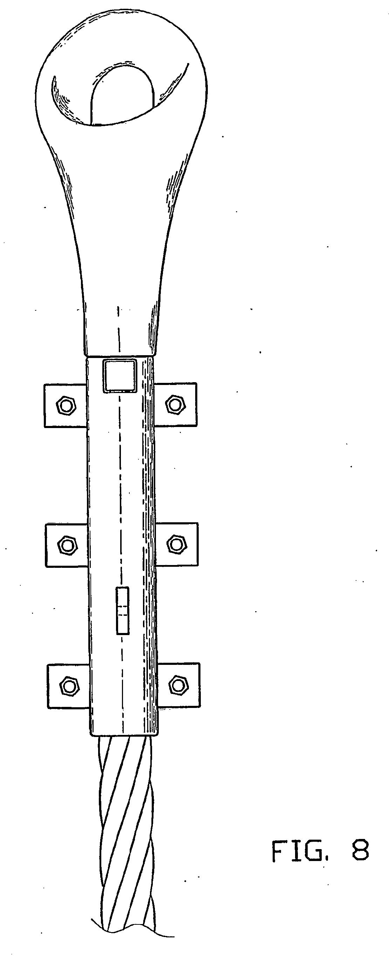

### Step 9, demounting positioning device and fixing clamp (figure 8)

After curing of the casting compound 95 the positioning device 30 is demounted and the fixing clamp 1 is detached from the vice 70. Via lubricating nipples 6 on the fixing clamp 1 lubricant is applied on the cable 60. Subsequently the fixing clamp 1 is removed after which superfluous sealant is removed and the cable 60 is greased. The cable 60 with the end connection is then ready to be used and supplied. The cable with end connection obtained according to the invention has a broad field of application. Such applications include for instance transfer of goods, but also other uses wherein heavy objects have to be hoisted, for instance lifts.

## Claims

1. Method for realising an end connection between a socket (90) and a metal cable (60), in particular a steel cable, composed of strands comprising the steps of fixing a first cable portion by means of a stationary held fixation device (1), which first cable portion is situated proximal with respect to a free cable portion (61) having a distal end, the subsequent brooming of the strands of the free cable portion, the squeezing together of the broomed end (65), the sliding of the socket over the squeezed together broomed end via the distal end of the free cable portion, the casting in of a first casting compound (95) in the socket arranged over the broomed end and letting the first casting compound cure, and the subsequent demounting of the fixation device, **characterized by** arranging a casting mould (10) around a second cable portion in between the first cable portion and the free cable portion (61), the casting in of a second casting compound into the casting mould and letting the second casting compound cure in order to provide the second cable portion with a resilient casing.

2. Method according to claim 1, wherein the casting mould is arranged around the second cable portion that is immediately adjacent to the proximal end of the free cable portion.

3. Method according to claim 1, **characterized by** forming the broomed end when the casting mould has already been arranged around the second cable portion, and after the resilient casing has been formed.

4. Method according to claim 1, 2 or 3, **characterized by** the internal diameter of the casting mould (10) being larger than the external diameter of the cable (60).

5. Method according to any one of the claims 1-4, **characterized by** the internal diameter of the casting mould (10) being larger than the diameter of the insertion opening for the cable (60) in the socket (90).

6. Method according to any one of the claims 1-5, **characterized by** the fixation device (1) serving as a stop in axial direction for the casting mould (10).

7. Method according to any one of the claims 1-6, **characterized by** the casting mould (10) being centred with respect to the fixation device (1) by means of centring means (30), the centring means preferably comprising an external wall portion of the fixation device and an internal wall portion of the casting mould fitting tightly around it.

8. Method according to any one of the claims 1-7, **characterized by**, prior to casting in the second casting compound into the casting mould (10) arranging a sealant between the strands of the cable (60) and the fixation device (1), in order to prevent that when casting in the second casting compound into the casting mould the second casting compound runs into the fixation device.

9. Method according to any one of the claims 1-8, **characterized by** the second casting compound being a synthetic material, preferably polyurethane.

10. Method according to any one of the preceding claims wherein the length over which the first cable portion is fixed by the fixation device (1) is larger than approximately three times the outer diameter of the cable (60), wherein, preferably, the length over which the first cable portion is fixed equals approximately seven times the outer diameter of the cable.

11. Method according to any one of the preceding claims, **characterized by** squeezing the broomed end together by moving a cylindrical or annular member arranged around the base of the broomed end upwards along the broomed end (65), wherein, preferably, the cylindrical or annular member is slid along the broomed end up to just before the distal end of the broomed end (65) and then arranging the socket (90) over the distal end of the broomed end, wherein, preferably, the socket is slid jointly with the cylindrical or annular member down over the broomed end.

12. Method according to claim 11, **characterized by** the removal of the cylindrical or annular member when the cylindrical or annular member abuts the casting mould (10) when sliding down, wherein, preferably, the socket (90) is being slid against the casting mould after removal of the cylindrical or annular member and the subsequent removal of the casting mould.

13. Method according to any one of the claims 3-12, **characterized by** after removal of the casting mould (10) the socket (90) being slid over the formed casing.

14. Method according to claim 13 when depending on claim 5, **characterized by** using a casing clamp for squeezing the casing together when sliding the socket (90) over the casing.

15. Method according to any one of the preceding claims, **characterized by** sliding the socket (90) over the broomed end (65) up against the fixation device (1).

16. Method according to any one of the preceding claims, **characterized by** the last stage of sliding the socket (90) over the cable (60) taking place by means of a device for positioning the socket with respect to the cable, wherein, preferably, the positioning device comprises a cross piece to be inserted through the eye of the socket, and adjustable legs attached to the cross piece, wherein, preferably, the legs are attachable to the fixation device (1).

17. Method according to any one of the preceding claims wherein the first cable portion is held in a vertical position by the fixation device (1), preferably with the broomed end (65) upwards.

18. Method according to any one of the preceding claims, **characterized by** prior to the demounting of the fixation device (1) the cable (60) being lubricated via lubricating nipples of the fixation device.

19. Method according to any one of the preceding claims, **characterized by** the fixation device (1) comprising two shells that can be clamped onto one another.

20. Method according to any one of the preceding claims wherein surface grinding of the end of the socket (90) at the location of the insertion opening for the broomed end (65) takes place, prior to sliding the socket over the broomed end.

21. Method according to any one of the preceding claims wherein the socket (90) is internally ground prior to being slid over the broomed end (65).

## Patentansprüche

1. Verfahren zum Herstellen einer Endverbindung zwischen einer Fassung (90) und einem Metallkabel (60), insbesondere einem Stahlkabel, welches aus Adern aufgebaut ist, umfassend die Schritte eines Fixierens eines ersten Kabelabschnitts mittels einer ortsfest gehaltenen Fixierungsvorrichtung (1), welcher erste Kabelabschnitt proximal bezüglich eines freien Kabelabschnitts (61) mit einem distalen Ende angeordnet ist, des anschließenden Aufbürstens der Adern des freien Kabelabschnitts, des Zusammendrückens des aufgebürsteten Endes (65), des Bewegens der Fassung über das zusammengedrückte aufgebürstete Ende über das distale Ende des freien Kabelabschnitts, das Eingießens einer ersten Gießmasse (95) in die Fassung, welche über dem aufgebürsteten Ende angeordnet ist, und Aushärtenlassens der ersten Gießmasse und des anschließenden Entfernens der Fixierungsvorrichtung,
**gekennzeichnet durch** ein Anordnen einer Gussform (10) um einen zweiten Kabelabschnitt zwischen dem ersten Kabelabschnitt und dem freien Kabelabschnitt (61), das Eingießen einer zweiten Gießmasse in die Gussform und Aushärtenlassen der zweiten Gießmasse, um den zweiten Kabelabschnitt mit einer elastischen Hülle zu versehen.

2. Verfahren nach Anspruch 1, wobei die Gussform um den zweiten Kabelabschnitt angeordnet ist, welcher unmittelbar benachbart zu dem proximalen Ende des freien Kabelabschnitts ist.

3. Verfahren nach Anspruch 1, **dadurch gekennzeichnet, dass** das aufgebürstete Ende gebildet wird, wenn die Gussform schon um den zweiten Kabelabschnitt angeordnet worden ist, und nachdem die elastische Hülle gebildet worden ist.

4. Verfahren nach Anspruch 1, 2 oder 3, **dadurch gekennzeichnet, dass** der Innendurchmesser der Gussform (10) größer ist als der Außendurchmesser des Kabels (60).

5. Verfahren nach einem der Ansprüche 1 bis 4, **dadurch gekennzeichnet, dass** der Innendurchmesser der Gussform (10) größer ist als der Durchmesser der Einführöffnung für das Kabel (60) in der Fassung (90).

6. Verfahren nach einem der Ansprüche 1 bis 5, **dadurch gekennzeichnet, dass** die Fixierungsvorrichtung (1) als ein Anschlag in axialer Richtung für die Gussform (10) dient.

7. Verfahren nach einem der Ansprüche 1 bis 6, **dadurch gekennzeichnet, dass** die Gussform (10) bezüglich der Fixierungsvorrichtung (1) mittels Zentriermitteln (30) zentriert ist, wobei die Zentriermittel vorzugsweise einen Außenwandabschnitt der Fixierungsvorrichtung und einen Innenwandabschnitt der Gussform umfassen, welcher eng darum angepasst ist.

8. Verfahren nach einem der Ansprüche 1 bis 7, **dadurch gekennzeichnet, dass** vor dem Eingießen der zweiten Gießmasse in die Gussform (10) ein Abdichtmittel zwischen den Adern des Kabels (60) und der Fixierungsvorrichtung (1) angeordnet wird, um zu verhindern, dass wenn die zweite Gießmasse in die Gussform eingegossen wird, die zweite Gießmasse in die Fixierungsvorrichtung läuft.

9. Verfahren nach einem der Ansprüche 1 bis 8, **dadurch gekennzeichnet, dass** die zweite Gießmasse ein synthetisches Material ist, vorzugsweise Polyurethan.

10. Verfahren nach einem der vorhergehenden Ansprüche, wobei die Länge, über welche der erste Kabelabschnitt durch die Fixierungsvorrichtung (1) fixiert ist, größer ist als etwa dreimal der Außendurchmesser des Kabels (60), wobei vorzugsweise die Länge, über die der erste Kabelabschnitt fixiert ist, etwa gleich sieben Mal dem Außendurchmesser des Kabels ist.

11. Verfahren nach einem der vorhergehenden Ansprüche, **dadurch gekennzeichnet, dass** das aufgebürstete Ende durch Bewegen eines zylindrischen oder ringförmigen Elements, welches um den Anfang des aufgebürsteten Endes angeordnet ist, nach oben entlang des aufgebürsteten Endes (65) zusammengedrückt wird, wobei vorzugsweise das zylindrische oder ringförmige Element entlang des aufgebürsteten Endes bis gerade kurz vor das distale Ende des aufgebürsteten Endes (65) bewegt wird, und dann die Fassung (90) über dem distalen Ende des aufgebürsteten Endes angeordnet wird, wobei vorzugsweise die Fassung zusammen mit dem zylindrischen oder ringförmigen Element nach unten über das aufgebürstete Ende bewegt wird.

12. Verfahren nach Anspruch 11, **dadurch gekennzeichnet, dass** das zylindrische oder ringförmige Element entfernt wird, wenn das zylindrische oder ringförmige Element an der Gussform (10) anliegt, wenn es nach unten bewegt wird, wobei vorzugsweise die Fassung (90) nach dem Entfernen des zylindrischen oder ringförmigen Elements gegen die Gussform bewegt wird, und anschließend die Gussform entfernt wird.

13. Verfahren nach einem der Ansprüche 3 bis 12, **dadurch gekennzeichnet, dass** nach dem Entfernen der Gussform (10) die Fassung (90) über die gebildete Hülle bewegt wird.

14. Verfahren nach Anspruch 13, wenn dieser auf Anspruch 5 rückbezogen ist, **dadurch gekennzeichnet, dass** eine Hüllen-Klemme zum Zusammendrücken der Hülle verwendet wird, wenn die Fassung (90) über die Hülle bewegt wird.

15. Verfahren nach einem der vorhergehenden Ansprüche, **dadurch gekennzeichnet, dass** die Fassung (90) über das aufgebürstete Ende (65) nach oben gegen die Fixierungsvorrichtung (1) bewegt wird.

16. Verfahren nach einem der vorhergehenden Ansprüche, **dadurch gekennzeichnet, dass** der letzte Abschnitt eines Bewegens der Fassung (90) über das Kabel (60) mittels einer Vorrichtung zum Positionieren der Fassung bezüglich des Kabels stattfindet, wobei vorzugsweise die Positionierungsvorrichtung ein Querstück, welches durch das Auge der Fassung eingeführt wird, und einstellbare Beine umfasst, welche an dem Querstück befestigt sind, wobei vorzugsweise die Beine an der Fixierungsvorrichtung (1) anbringbar sind.

17. Verfahren nach einem der vorhergehenden Ansprüche, wobei der erste Kabelabschnitt durch die Fixierungsvorrichtung (1) in einer vertikalen Position gehalten wird, vorzugsweise mit dem aufgebürsteten Ende (65) nach oben.

18. Verfahren nach einem der vorhergehenden Ansprüche, **dadurch gekennzeichnet, dass** vor dem Entfernen der Fixierungsvorrichtung (1) das Kabel (60) mittels Schmiernippel der Fixierungsvorrichtung geschmiert wird.

19. Verfahren nach einem der vorhergehenden Ansprüche, **dadurch gekennzeichnet, dass** die Fixierungsvorrichtung (1) zwei Schalen umfasst, die aneinander geklemmt werden können.

20. Verfahren nach einem der vorhergehenden Ansprüche, wobei ein Oberflächenschleifen des Endes der Fassung (90) an der Position der Einführöffnung für das aufgebürstete Ende (65) vor dem Bewegen der Fassung über das aufgebürstete Ende stattfindet.

21. Verfahren nach einem der vorhergehenden Ansprüche, wobei die Fassung (90) innen geschliffen wird, bevor sie über das aufgebürstete Ende bewegt wird.

## Revendications

1. Procédé pour réaliser une connexion d'extrémité entre une prise femelle (90) et un câble métallique (60), en particulier un câble en acier, composé de brins comprenant les étapes consistant à fixer une première partie de câble au moyen d'un dispositif de fixation fixe (1), laquelle première partie de câble est positionnée de manière proximale par rapport à une partie de câble libre (61) ayant une extrémité distale, éclater ensuite les brins de la partie de câble libre, serrer l'extrémité éclatée (65), faire coulisser la prise femelle sur l'extrémité éclatée serrée via l'extrémité distale de la partie de câble libre, mouler un premier composé de moulage (95) dans la prise femelle agencée sur l'extrémité éclatée et laisser durcir le premier composé de moulage et démonter ensuite le dispositif de fixation, **caractérisé en ce qu'**il comporte des étapes consistant à agencer un moule (10) autour d'une seconde partie de câble entre la première partie de câble et la partie de câble libre (61), mouler un second composé de moulage dans le moule et laisser durcir le second composé de moulage afin de doter la seconde partie de câble d'un boîtier élastique.

2. Procédé selon la revendication 1, **caractérisé en ce que** le moule est agencé autour de la seconde partie de câble qui est immédiatement adjacente à l'extrémité proximale de la partie de câble libre.

3. Procédé selon la revendication 1, **caractérisé en ce qu'**il comporte une étape consistant à former l'extrémité éclatée lorsque le moule a déjà été agencé autour de la seconde partie de câble et après que le boîtier élastique a été formé.

4. Procédé selon la revendication 1, 2 ou 3, **caractérisé en ce que** le diamètre interne du moule (10) est supérieur au diamètre externe du câble (60).

5. Procédé selon l'une quelconque des revendications 1 à 4, **caractérisé en ce que** le diamètre interne du moule (10) est supérieur au diamètre de l'ouverture d'insertion pour le câble (60) dans la prise femelle (90).

6. Procédé selon l'une quelconque des revendications 1 à 5, **caractérisé en ce que** le dispositif de fixation (1) sert de butée dans la direction axiale pour le moule (10).

7. Procédé selon l'une quelconque des revendications 1 à 6, **caractérisé en ce que** le moule (10) est centré par rapport au dispositif de fixation (1) au moyen de moyens de centrage (30), les moyens de centrage comprenant de préférence une partie de paroi externe du dispositif de fixation et une partie de paroi interne du moule montée de manière étanche autour de cette dernière.

8. Procédé selon l'une quelconque des revendications 1 à 7, **caractérisé en ce que**, avant l'étape consistant à mouler le second composé de moulage dans le moule (10), l'étape consistant à agencer un produit d'étanchéité entre les brins du câble (60) et le dispositif de fixation (1) afin d'empêcher lors du moulage du second composé de moulage dans le moule, le second composé de moulage ne s'étende dans le dispositif de fixation.

9. Procédé selon l'une quelconque des revendications 1 à 8, **caractérisé en ce que** le second composé de moulage est un matériau synthétique, de préférence du polyuréthane.

10. Procédé selon l'une quelconque des revendications précédentes, **caractérisé en ce que** la longueur sur laquelle la première partie de câble est fixée par le dispositif de fixation (1) est supérieure à approximativement trois fois le diamètre externe du câble (60), dans lequel, de préférence, la longueur sur laquelle la première partie de câble est fixée, égale approximativement sept fois le diamètre externe du câble.

11. Procédé selon l'une quelconque des revendications précédentes, **caractérisé en ce qu'**il comporte une étape consistant à serrer l'extrémité éclatée en déplaçant un élément cylindrique ou annulaire agencé autour de la base de l'extrémité éclatée vers le haut le long de l'extrémité éclatée (65), dans lequel, de préférence l'élément cylindrique ou annulaire coulisse le long de l'extrémité éclatée jusque juste avant l'extrémité distale de l'extrémité éclatée (65) et en agençant ensuite la prise femelle (90) sur l'extrémité distale de l'extrémité éclatée, dans lequel, de préférence, la prise femelle coulisse conjointement avec l'élément cylindrique ou annulaire vers le bas sur l'extrémité éclatée.

12. Procédé selon la revendication 11, **caractérisé en ce qu'**il comporte le retrait de l'élément cylindrique ou annulaire lorsque l'élément cylindrique ou annulaire vient en butée contre le moule (10) lors du coulissement vers le bas, dans lequel, de préférence, la prise femelle (90) coulisse contre le moule après le retrait de l'élément cylindrique ou annulaire et le retrait consécutif du moule.

13. Procédé selon l'une quelconque des revendications 3 à 12, **caractérisé en ce que**, après le retrait du moule (10), la prise femelle (90) coulisse sur le boîtier formé.

14. Procédé selon la revendication 13 lorsqu'elle dépend de la revendication 5, **caractérisé en ce qu'**il comporte une étape consistant à utiliser une pince de boîtier pour serrer le boîtier lors du coulissement de la prise femelle (90) sur le boîtier.

15. Procédé selon l'une quelconque des revendications précédentes, **caractérisé en ce qu'**il comporte une étape consistant à faire coulisser la prise femelle (90) sur l'extrémité éclatée (65) jusque contre le dispositif de fixation (1).

16. Procédé selon l'une quelconque des revendications précédentes, **caractérisé en ce qu'**il comporte une dernière étape consistant à faire coulisser la prise femelle (90) sur le câble (60) qui a lieu au moyen d'un dispositif pour positionner la prise femelle par rapport au câble, dans lequel, de préférence, le dispositif de positionnement comprend une traverse destinée à être insérée à travers l'oeillet de la prise femelle, et des pattes ajustables fixées sur la traverse, de préférence, les pattes peuvent être fixées sur le dispositif de fixation (1).

17. Procédé selon l'une quelconque des revendications précédentes, **caractérisé en ce que** la première partie de câble est maintenue dans une position verticale par le dispositif de fixation (1), de préférence avec l'extrémité éclatée (65) vers le haut.

18. Procédé selon l'une quelconque des revendications précédentes, **caractérisé en ce que**, avant le démontage du dispositif de fixation (1), le câble (60) est lubrifié via des manchons de lubrification du dispositif de fixation.

19. Procédé selon l'une quelconque des revendications précédentes, **caractérisé en ce que** le dispositif de fixation (1) comprend deux coques qui peuvent être serrées l'une sur l'autre.

20. Procédé selon l'une quelconque des revendications précédentes, **caractérisé en ce que** l'étape de meulage de surface de l'extrémité de la prise femelle (90) à l'emplacement de l'ouverture d'insertion pour l'extrémité éclatée (65) a lieu avant l'étape consistant à faire coulisser la prise femelle sur l'extrémité éclatée.

21. Procédé selon l'une quelconque des revendications précédentes, **caractérisé en ce que** la prise femelle (90) est meulée intérieurement avant de coulisser sur l'extrémité éclatée (65).
